(19) Europäisches Patentamt — European Patent Office — Office européen des brevets

(11) **EP 3 996 332 B1**

(12) **EUROPEAN PATENT SPECIFICATION**

(45) Date of publication and mention of the grant of the patent:
**10.01.2024 Bulletin 2024/02**

(21) Application number: **21191673.9**

(22) Date of filing: **17.08.2021**

(51) International Patent Classification (IPC):
$H04L\ 12/28$ (2006.01)  $H04J\ 3/06$ (2006.01)
$H04L\ 47/283$ (2022.01)  $H04L\ 43/0852$ (2022.01)
$H04L\ 67/62$ (2022.01)  $H02M\ 1/088$ (2006.01)
$H03K\ 17/28$ (2006.01)  $H02M\ 1/00$ (2006.01)
$H04L\ 41/0816$ (2022.01)

(52) Cooperative Patent Classification (CPC):
**H02M 1/00; H04J 3/0667; H04J 3/0673; H04L 12/2818; H04L 12/2825; H04L 41/0816; H04L 43/0858; H04L 47/283;** H04L 67/10; Y04S 40/00; Y04S 40/18

(54) **CONTROL APPARATUS, CONTROL METHOD, COMPUTER-READABLE MEDIUM, AND COMMUNICATION SYSTEM**

STEUERUNGSVORRICHTUNG, STEUERUNGSVERFAHREN, COMPUTERLESBARES MEDIUM UND KOMMUNIKATIONSSYSTEM

APPAREIL DE COMMANDE, PROCÉDÉ DE COMMANDE, SUPPORT LISIBLE PAR ORDINATEUR ET SYSTÈME DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2020 JP 2020184167**

(43) Date of publication of application:
**11.05.2022 Bulletin 2022/19**

(73) Proprietor: **KABUSHIKI KAISHA TOSHIBA**
**Minato-ku**
**Tokyo 105-0023 (JP)**

(72) Inventor: **Teramoto, Keiichi**
**Tokyo 105-0023 (JP)**

(74) Representative: **Hoffmann Eitle**
**Patent- und Rechtsanwälte PartmbB**
**Arabellastraße 30**
**81925 München (DE)**

(56) References cited:
WO-A1-2015/001311      US-A1- 2012 187 770
US-A1- 2017 185 055

**Description**

FIELD

The present disclosure relates to a control apparatus, a control method, a computer-readable medium, and a communication system.

BACKGROUND

Systems are known, which include a control apparatus, such as a server, for controlling a plurality of devices installed in a remote location. It may be preferable for such a system to control the operation timing of the devices more accurately, for example, to control the devices to start operating at the same time.

WO 2015/001311 A1 relates to relates to methods and circuits for controlling switching of parallel coupled power semiconductor switching devices, for example for use in a power converter. In an example, there is provided a circuit for controlling switching of parallel coupled power semiconductor switching devices, the circuit comprising a plurality of drive modules, each said module for controlling a said power semiconductor switching device; control circuitry to transmit switch command signals to the modules, each said switch command signal to trigger a said drive module to control a said power semiconductor switching device to switch state and voltage isolation between the drive modules and the control circuitry.

US 2017/185055 A1 relates to a process control system including a controller, at least one input and output module connected to the controller and an allowable propagation delay value calculator in the controller, the allowable propagation delay value calculator being configured to calculate, based on the number of input and output modules connected to the controller, an allowable range for propagation delay time between the controller and the input and output module.

US 2012/187770 A1 relates to a system including a plurality of synchronization modules, wherein each synchronization module corresponds to one power generator. The synchronization modules are configured to output a control signal to adjust a frequency of the respective power generator to correspond with the frequency of the existing power grid. The system also includes a central controller in communication with the plurality of synchronization modules. The central controller is configured to determine a propagation delay with respect to each synchronization module. The propagation delay is a measure of time for a signal to propagate from the respective synchronization module to the central controller. The central controller is further configured to send a control signal to each synchronization module to control when each synchronization module connects the respective power generator to the existing power grid.

BRIEF DESCRIPTION OF THE DRAWINGS

FIG. 1 is a diagram of an overall configuration of a communication system including a control apparatus according to an arrangement;
FIG. 2 is a diagram of an overall configuration of a communication system including a control apparatus according to an arrangement;
FIG. 3 is a block diagram of apparatuses and a device according to a first arrangement;
FIG. 4 is a diagram illustrating a communication delay and an operation delay in a control command;
FIG. 5 is a diagram illustrating exemplary calculation information for use in calculating an estimated value;
FIG. 6 is a flowchart of control processing according to the first arrangement;
FIG. 7 is a block diagram of apparatuses and a device according to a second arrangement;
FIG. 8 is a sequence diagram of control processing according to the second arrangement; and
FIG. 9 is a hardware configuration diagram of an apparatus according to an arrangement.

DETAILED DESCRIPTION

The object of the invention is achieved by the subject-matter of the independent claims. Advantageous embodiments are defined in the dependent claims. Further examples are provided for facilitating the understanding of the invention.

Arrangements of a control apparatus according to the present invention will be described in detail below with reference to the accompanying drawings.

In view of efficient use of renewable energy, energy efficiency, and energy utilization, distributed power supplies, such as photovoltaics (PV), storage batteries, and electric vehicles (EV), have been given a great importance and widespread. In the balancing market, which is due to be launched, such distributed power supplies may be controlled according to results of transaction. In such a balancing market, not only larger-scale distributed power supplies but also smaller-scale power supplies are to be subjected to transactions. That is, there have been growing needs for controlling the small-scale distributed power supplies (including customers' owned power supplies) in a distributed manner at a higher speed. Under such circumstances, requirements for operating distributed power supplies correctly at designated times draw attention.

Meanwhile, upon start of the fifth generation (5G) mobile communication system and local 5G service, a communication infrastructure with less delay than before is being constructed. In addition, installation of an application executable environment called multi-access edge computing (MEC) in the vicinity of a 5G base station is under consideration. Thus, it is expected that control in a distributed environment using MEC is of greater importance in addition to centralized control in a cloud environment.

Consider that among device groups such as distributed power supplies placed in a distributed manner in a wide area, a designated subset of a device group is remotely controlled simultaneously at given time from a cloud environment. A control command (a packet for transmitting a control command) typically reaches the devices at different times because of a difference in communication delay. Thus, simply transmitting the control command through broadcasting may result in a failure in controlling the devices to start operating at the same time.

It is possible to transmit the control command so that it arrives at the respective devices at substantially the same timing by adjusting the control-command transmission timing for each of the devices in view of communication delay. However, it may take a time (operation delay time) for some devices to complete a transition to a designated operation state (switching to a desired operation) from receipt of the control command.

Such operation delay time may vary depending on a difference in device type or model, details of the control command, and previous operation states of the devices.

When the device to be controlled is a storage battery and the storage battery is controlled to change discharge power to X(W), for example, the storage battery typically requires an operation delay time to change discharge power to a value X(W) (completion of switching to a desired operation) from receipt of a control command for the change.

Further, even with respect to the same control command (for example, a control command for changing discharge power), the operation delay time for completion of a transition to a desired operation state may differ depending on the operation state before receipt of the control command.

Examples of the operation state include a discharge state, a charge state, and a stop state. The operation states may be distinguished in consideration of the amount of power stored in the storage battery. For example, even if the previous operation states are the same discharge state, the operation delay time may differ in shifting the amount of power from X1 (W) to X (W) and in shifting the amount of power from X2 (W) to X (W).

Storage batteries of the same model are considered to have uniform characteristics. However, they may differ in operation delay time depending on the surrounding environments (such as temperature, climate, cold district, indoor, outdoor) and their usage conditions (e.g., period of use) .

Such variations in the operation delay time cause difficulty in implementing an operation instruction for the devices to transition to a desired operation state at desired time from the cloud environment.

With respect to one's own products, the operation delay time caused by a control command or a difference in states can be known in advance from the specification or test results. In this case, it is possible to adjust the control-command transmission timing in view of the operation delay time. However, as to devices manufactured by another manufacturer, for example, it may not be possible to know information on the operation delay time in advance. Even the operation delay time of one's own product may differ from the actual result due to an influence of an installation environment, as described above.

Thus, it is desirable to establish a system that implements supervisory control over devices (such as distributed power supplies) installed in a distributed manner, to be able to manage and estimate a delay time of each of the devices so as to accurately control the devices to transition (switch) to another operation at designated time in consideration of communication delay and operation delay.

Control apparatuses according to the following arrangements individually and dynamically estimate or predict the operation delay time of intended devices, to control the devices in view of the delay time. Thereby, the control apparatuses can accurately control the devices to make a state transition (switch operation states) at designated time.

First Arrangement

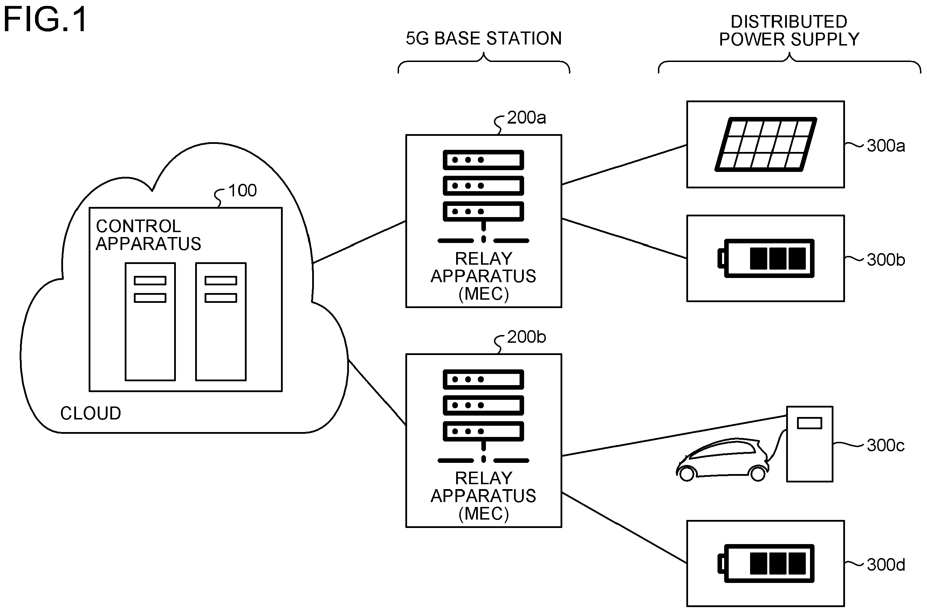

FIG. 1 is a diagram illustrating an exemplary overall configuration of a communication system including a control apparatus according to a first arrangement. As illustrated in FIG. 1, in the communication system of the present arrangement the control apparatus 100 is connected to devices 300a to 300d as a subject of control via relay apparatuses 200a and 200b through a network. The network is, for example, the Internet but may be of any other form. The network may be a wired network, a wireless network, or a combination thereof.

The control apparatus 100 is, for example, a server built up in a cloud environment. The relay apparatuses 200a and 200b are, for example, MECs installed in the vicinity of a 5G base station. The relay apparatuses 200a and 200b are simply referred to as relay apparatus or apparatuses 200 unless they are to be distinguished from each other. The number of the relay apparatuses 200 is not limited to two, and may be one or three or more.

The devices 300a to 300d are to be controlled by the control apparatus 100. FIG. 1 illustrates distributed power supplies as an example of the devices 300a to 300d. The device 300a serves as a solar battery. The devices 300b and 300d serve as storage batteries. The device 300c serves as a charger and discharger for charge and discharge with respect to an electric vehicle. The devices 300a to 300d are simply referred to as device or devices 300 unless they are to be distinguished from each other. The number of the devices 300 is not limited to four, and may be two or three or five or more.

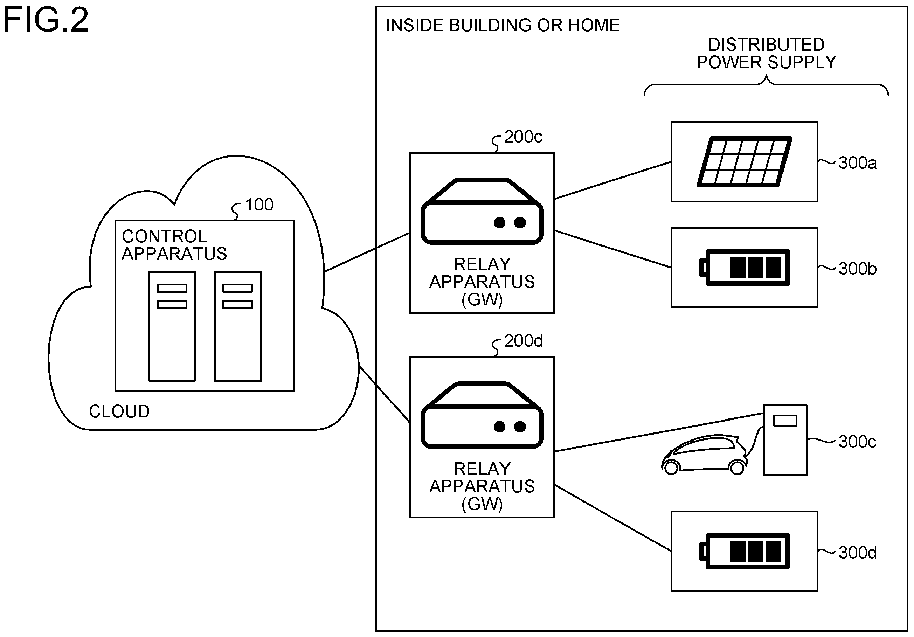

FIG. 2 is a diagram illustrating an exemplary overall configuration of another communication system including the control apparatus 100 according to the first arrangement. FIG. 2 illustrates an exemplary configuration including gateways (GW) installed inside a building or a home as relay apparatuses 200 (200c and 200d).

In both the communication systems in FIGS. 1 and 2, the relay apparatuses 200 receive a control command from the control apparatus 100 and then transfer the control command to the devices 300. A communication protocol between the control apparatus 100 and the relay apparatuses 200 may be the same as or different from a communication protocol between the relay apparatuses 200 and the devices 300.

The communication protocol may be a virtual private network (VPN) protocol. As for the communication system in FIG. 2, the communication protocol between the gateways (relay apparatuses 200) and the devices 300 may be exemplified by ECHONET Lite (registered trademark), which is a control standard for an power management system (EMS).

The system configurations in FIGS. 1 and 2 are merely exemplary, and the communication systems may have any other configuration. For example, the function of the control apparatus 100 in FIG. 2 may be implemented by an MEC. The communication systems in FIGS. 1 and 2 are configured on the premise that the devices 300 include no function of establishing direct secure communications with the control apparatus 100. The devices 300 may include a function of secure communications with the control apparatus 100 to communicate with the control apparatus 100 without the relay apparatuses 200. In this case, the difference between the former and the latter is in omission of the processing time of the relay apparatuses 200. The following will mainly describe the communication system including the relay apparatuses 200 by way of example.

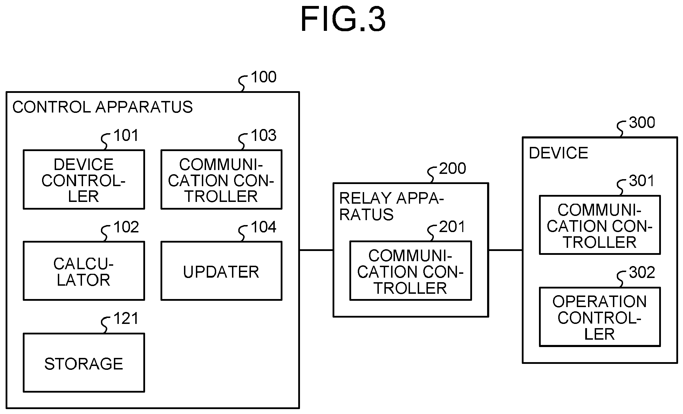

FIG. 3 is a block diagram illustrating an exemplary configuration of the apparatuses and the device according to the first arrangement. As illustrated in FIG. 3, the control apparatus 100 includes a storage 121, a device controller 101, a calculator 102, a communication controller 103, and an updater 104.

The storage 121 stores therein various types of information for use in various types of processing to be executed by the control apparatus 100. For example, the storage 121 stores therein pieces of classification information in association with pieces of calculation information. The classification information represents at least one of the type of a control command generated by the device controller 101 and the type of a state transition of the device 300 in operation following the control command. The calculation information represents an estimated value of an operation delay time or a calculation formula for calculating the estimated value. The information stored in the storage 121 will be described in detail later.

The storage 121 can include any general-purpose storage medium, such as flash memory, a memory card, a random access memory (RAM), a hard disk drive (HDD), and an optical disk.

The device controller 101 serves to control the operations of the devices 300. For example, the device controller 101 generates a control command for controlling the operations of the devices 300. The control command may be any command as long as it is for use in controlling the operations of the devices 300. With respect to the devices 300 being distributed power supplies, the device controller 101 may generate, for example, the following control commands:

a command for turning on or off the power of the devices 300;
a command for changing a designated value of power (charging power or discharge power); and
a command for changing the states (e.g., discharge state, charge state, and stop state) of the devices 300.

The calculator 102 serves to calculate an estimated value of the operation delay time for each of the devices 300. For example, the calculator 102 calculates an estimated value of the operation delay time according to the classification information corresponding to the control command generated by the device controller 101. Specifically, the calculator 102 calculates an estimated value of the operation delay time according to the calculation information associated with the classification information of the control command as generated, of the calculation information stored in the storage 121.

The communication controller 103 serves to control communications between the control apparatus 100 and external apparatuses, such as the relay apparatuses 200. For example, the communication controller 103 transmits the control command to the devices 300 via the relay apparatuses 200 such that the devices 300 complete a state transition at desired time after operating by the control command. The communication controller 10 adjusts, for example, a transmission time in consideration of the delay time so that the devices 300 complete a state transition at desired time, and transmits the control command to the devices 300 at the transmission time.

The device controller 101 adjusts the transmission time and control the communication controller 103 to transmit the control command at the adjusted transmission time. The control apparatus 100 (communication controller 103 or device controller 101) may instruct the relay apparatuses 200 to transmit the control command at the adjusted transmission time, and the relay apparatuses 200 may transmit the control command at the transmission time as instructed.

The delay time includes communication delay time and operation delay time. The communication delay time of each of the devices 300 may be calculated by any method. As an example, the communication delay time can be calculated by the following methods:

M1: calculating the communication delay time from an average value of actual values (history) of the communication delay time acquired through communications with the devices 300;

M2: calculating the communication delay time according to the features (such as communication speed) of the network between the control apparatus 100 and the devices 300.

The updater 104 serves to update the calculation information stored in the storage 121. For example, the updater 104 updates the calculation information with an actual value of the operation delay time and stores the updated calculation information in the storage 121.

The elements (i.e., device controller 101, calculator 102, communication controller 103, and updater 104) are implemented by, for example, one or a plurality of processors. For example, the elements may be implemented by software, that is, by causing a processor such as a central processing unit (CPU) to execute a computer program. The elements may be implemented by hardware, that is, a processor such as a dedicated integrated circuit (IC). The elements may be implemented by a combination of software and hardware. In the case of using multiple processors, each of the processors may implement one or two or more of the elements.

The relay apparatuses 200 each include a communication controller 201. The communication controller 201 serves to control communications with external apparatuses and devices, such as the control apparatus 100 and the devices 300. For example, the communication controller 201 receives and transfers the control command from the control apparatus 100 to the devices 300.

The devices 300 each include a communication controller 301 and an operation controller 302. The communication controller 301 controls communications with external apparatuses, such as the relay apparatus 200. For example, the communication controller 301 controls reception of the control command from the relay apparatus 200 and transmission of a response (response packet) to the control command via the relay apparatus 200. The operation controller 302 serves to control operation of the device 300 in accordance with the control command. For example, with respect to the device 300 being a distributed power supply, the operation controller 302 controls the device 300 to power on and off, change a designated power value, and change the state in accordance with the control command.

As with the elements of the control apparatus 100, the elements of the relay apparatuses 200 and the devices 300 can be implemented by, for example, one or a plurality of processors.

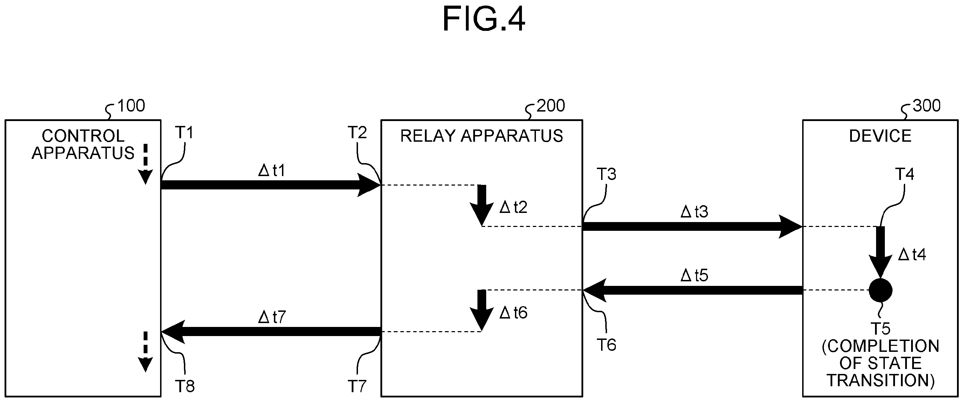

Next, the delay time in transmission of the control command will be described. FIG. 4 is a diagram illustrating a communication delay and an operation delay in the control command when issued from the control apparatus 100 to the device 300 via the relay apparatus 200.

For the sake of simple explanation, FIG. 4 omits illustrating a time taken for a process from when the device controller 101 generates a control command to instruct the communication controller 103 to transmit the control command to when the communication controller 103 outputs the control command to the network with the relay apparatus 200 (as indicated by the dotted arrows in the drawing). FIG. 4 also omits illustrating a time taken for internal processing of the control apparatus 100 after receiving a response to the control command from the network with the relay apparatus 200.

In FIG. 4, T1 represents time at which the control apparatus 100 transmits the control command, and T2 represents time at which the relay apparatus 200 receives the control command. The communication delay time between T1 and T2 is defined as $\Delta t1$ (= T2 - T1).

$\Delta t2$ represents a processing time taken for the relay apparatus 200 to convert and transfer the control command to the device 300 to be controlled.

T3 represents time at which the relay apparatus 200 transmits the control command. T4 represents time at which the device 300 receives the control command. The communication delay time between T3 and T4 is defined as $\Delta t3$ (= T4 - T3).

$\Delta t4$ represents an operation delay time from the device 300's receiving the control command to completing a state transition (switching) to an operation state as instructed by the control command.

As illustrated in FIG. 4, for example, the device 300 (communication controller 301) returns a response packet at time T5 immediately after completing the transition. The relay apparatus 200 receives the response packet after elapse of a communication delay time $\Delta t5a$.

T6 represents time at which the relay apparatus 200 receives the response packet. $\Delta t6$ represents an internal

processing time. T7 represents time at which the relay apparatus 200 returns the response packet to the control apparatus 100. The control apparatus 100 receives the response packet after an elapse of a communication delay time $\Delta t7$.

T8 represents time at which the control apparatus 100 receives the response packet. The communication delay time $\Delta t7$ is defined as T8 - T7.

The communication delay time and the operation delay time occurring from the transmission of the control command from the control apparatus 100 to the device 300 is defined as $\Delta t1 + \Delta t2 + \Delta t3$, and $\Delta t4$, respectively. As described above, the communication delay time can be obtained by, for example, the methods M1 and M2. In the following, the communication delay time is assumed to be constant irrespective of a control command type, for the sake of simple explanation.

In the present arrangement, it is assumed that at least T4 and T5 (or $\Delta t4$) among T1, T2, T3, T4, and T5 be added to the response packet with respect to the control command and that the relay apparatus 200 employ a protocol available for the control apparatus 100. For example, the communication controller 301 returns the response packet containing at least T4 and T5 (or $\Delta t4$) as a response to the control command, to the control apparatus 100 via the relay apparatus 200.

Thus, the actual value of the operation delay time can be obtained from temporal information added to the response packet. For example, from the response packet containing added temporal information T4 and T5, the updater 104 calculates the actual value of the operation delay time by the formula $\Delta t4 = T5 - T4$. From the response packet containing added temporal information $\Delta t4$, the updater 10 can use the added value as the actual value of the operation delay time as it is.

A method of indirectly obtaining the time $\Delta t4$ when T4 and T5 (or $\Delta t4$) are not directly obtainable will be described in a second arrangement.

The control apparatus 100 of the present arrangement individually and dynamically estimates or predicts the operation delay time $\Delta t4$ of the devices 300 so as to be able to obtain different values irrespective of differences in the types or models of the devices 300, the control command types, operation states before execution of various commands, characteristics of the devices 300, installation environments, and the usage conditions of the devices 300, for example. The control apparatus 100 then controls the devices 300 to complete an operation-state transition (switching) at designated time, according to the estimated value of the operation delay time.

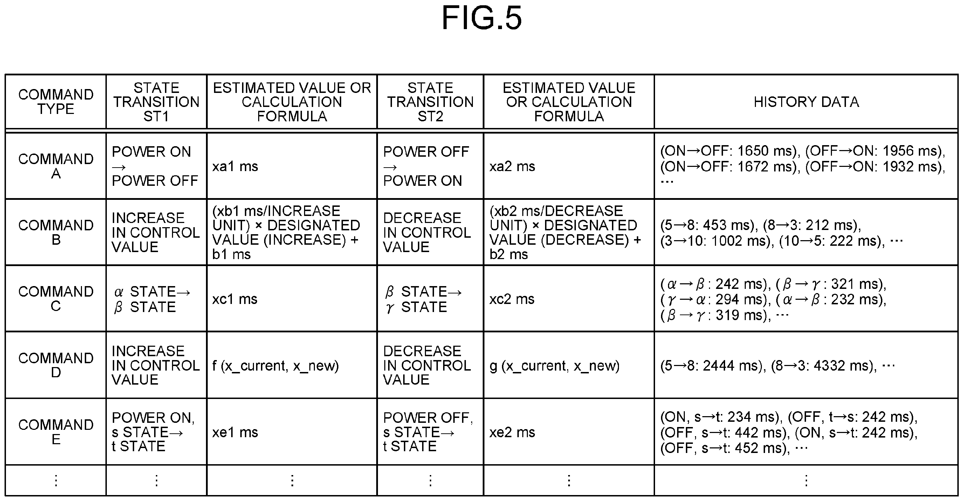

The following will describe a method of calculating an estimated value of the operation delay time. FIG. 5 is a diagram illustrating exemplary calculation information for use in calculating the estimated value. As illustrated in FIG. 5, the calculation information includes a command type, a plurality of state transitions (ST1 and ST2), an estimated value or a calculation formula for the operation delay time ($\Delta t4$) with respect to each of the state transitions, and history data. The number of the state transitions is not limited to two, and may be one or three or more.

The calculation information in FIG. 5 is stored for each piece of identification information (e.g., device ID) for identifying the devices 300, for example. This makes it possible to calculate the operation delay time, which differs even among the devices 300 of the same model depending on, for example, the surrounding environments and/or the usage conditions of the devices 300.

The unit of managing the calculation information is not limited to the above example. The calculation information may be managed for each piece of identification information for identifying the types or models of the devices 300. Alternatively, if the types or models of the devices 300 and the surrounding environments are limited, for example, the calculation information illustrated in FIG. 5 may be managed in common for all the devices 300.

The control apparatus 100 (calculator 102) dynamically estimates or predicts a $\Delta t4$ value by referring to the calculation information illustrated in FIG. 5. The control apparatus 100 (updater 104) updates the estimated value or the calculation formula, using history data.

The history data represents an actual $\Delta t4$ value calculated at the time of transmission of the corresponding control command. Each time a control command is transmitted, the actual $\Delta t4$ value obtained as described above is stored in the storage 121 as the history data.

The updater 104 calculates the estimated value and the calculation formula for the operation delay time $\Delta t4$ for each type of the control command and each type of an operation state transition by the control command, by averaging and linear regression of the history data (history data aggregate), and stores the resultant value and formula in the storage 121.

For example, a control command A serves to cause the devices 300 to transition from a power-ON state to a power-OFF state or from a power-OFF state to a power-ON state. The state transition ST1 indicates a transition from the power-ON state to the power-OFF state. xa1 (ms) represents an estimate of the $\Delta t4$ value calculated from the history data in this case. The state transition ST2 indicates a transition of a power-OFF state to a power-ON state. xa2 (ms) represents an estimate of the $\Delta t4$ value calculated from the history data in this case.

As for the history data containing (ON-OFF: 1650 ms), (OFF→ON: 1956 ms), (ON-OFF: 1672 ms), and (OFF→ON: 1932 ms), the updater 104 can calculate each of the estimated values by, for example, calculating an average value of the history data by the following formulas:

$$xa1 = (1650 + 1672)/ 2;$$

and

$$xa2 = (1956 + 1932)/ 2.$$

The control command A may be divided into a control command A1 for a transition from a power-ON state to a power-OFF state and a control command A2 for a transition from a power-OFF state to a power-ON state for management, for example. In this case, only the estimated value or the calculation formula corresponding to one state transition ST1 is stored for each of the control commands A1 and A2, for example. If the control commands correspond to state transitions one by one, the calculation information can exclude the command-type column or the state-transition column. This signifies that the control command type and the state transition type can be interpreted as substantially the same.

A control command B serves to increase or decrease a control value relating to the operation of the device 300 by predefined increments and decrements. The state transition ST1 of the control command B indicates an increase in the control value in conformity with a designated value. The state transition ST2 indicates a decrease in the control value in conformity with a designated value.

On the premise that the $\Delta t4$ value linearly increase and decrease relative to a designated value, the updater 104 obtains the calculation formula for the estimated value. FIG. 5 illustrates calculation formulas for $\Delta t4$ by way of example as below:

$$\text{State transition ST1: } \Delta t4 = (xb1/\text{unit of increase}) \times (\text{increase in designated value}) + b1;$$

and

$$\text{State transition ST2: } \Delta t4 = (xb2/\text{unit of decrease}) \times (\text{decrease in designated value}) + b2.$$

xb1 (ms) represents the time taken for increasing the control value per unit of increase. b1 represents the initial value of an increase. xb2 (ms) represents the time taken for decreasing the control value per unit of decrease. b2 represents the initial value of a decrease.

Assume that the unit of increase and the unit of decrease be both one and that the history data contain (5→8: 453 ms), (8,3: 212 ms), (3,10: 1002 ms), and (10,5: 222 ms). For example, "5→8" indicates a designated value increasing from 5 to 8. Thus, at the time of increasing, (increase in designated value, $\Delta t4$) is obtained as (3, 453) and (7, 1002). At the time of decreasing, (decrease in designated value, $\Delta t4$) is obtained as (-5, 212) and (-5, 222). The updater 104 can derive xb1 and b1 or xb2 and b2 by linear regression of these pieces of information.

A control command C serves to cause the device 300 to transition among a plurality of predefined states. FIG. 5 illustrates an example that the device 300 can be placed in three states, $\alpha$, $\beta$, and $\gamma$. That is, six state transitions, $\alpha \to \beta$, $\beta \to \alpha$, $\beta \to \gamma$, $\gamma \to \beta$, $\alpha \to \gamma$, and $\gamma \to \alpha$, are possible. When the device 300 can be in n states, the number of the state transitions will be $_nP_2$ at maximum. FIG. 5 illustrates only two of the six state transitions; however, in response to another state transition, the updater 104 also stores the estimated value or the calculation formula with respect to this state transition.

The updater 104 calculates the estimated value or the calculation formula from the history data for each of the state transitions. From the history data containing ($\alpha \to \beta$: 242 ms), ($\beta \to \gamma$: 321 ms), ($\gamma \to \alpha$: 294 ms), ($\alpha \to \beta$: 232 ms), and ($\beta \to \gamma$: 319 ms), the updater 104 can calculate, for example, the estimated values as average values of the history data as below:

$$xc1 = (242 + 232)/ 2;$$

and

$$xc2 = (321 + 319)/ 2.$$

xc1 (ms) represents an estimate of the Δt4 value calculated from the history data in a state transition from α to β. xc2 (ms) represents an estimate of the Δt4 value calculated from the history data in a state transition from β to γ.

A control command D serves to designate a control value relating to the operation of the device 300. The state transition ST1 as to the control command D indicates an increase in the control value in conformity with a designated value. The state transition ST2 indicates a decrease in the control value in conformity with a designated value. The control command D causes the control value to shift from a current state x_current to a new state x_new.

On the premise that the Δt4 value increase or decrease relative to a designated value in accordance with an approximation function, the updater 104 obtains the calculation formula for the estimated value. FIG. 5 illustrates calculation formulas for Δt4, as below:

State transition ST1: Δt4 = f(x_current,x_new); and
State transition ST2: Δt4 = g(x_current,x_new).

The updater 104 models the approximation function using, for example, a learning curve for use in machine learning, and samples the history data as training data to obtain the approximation function. f() represents the approximation function for increasing the control value. g() represents the approximation function for decreasing the control value.

Such a modeling method using an approximation function is applicable to a situation that the Δt4 value cannot be estimated from history data by an average value or linear regression. Such a method is, for example, applicable to modeling of a situation that a difference occurs in increase rate of the operation delay time during a shift in the control value from 1 to 2 and during a shift in the control value from 2 to 4.

A control command E serves to cause the device 300 to make a state transition. The control command E also serves to distinguish states of an element differing from the element that makes a state transition, in order to calculate the estimated value or the calculation formula.

The state transition ST1 as to the control command E indicates a transition from an operation state "s" (for example, charging state) to an operation state "t" (for example, discharge state) during the power-ON state. xe1 (ms) represents an estimate of the Δt4 value calculated from the history data in this case. The state transition ST2 indicates a transition from the operation state "s" (for example, charging state) to the operation state "t" (for example, discharge state) during the power-OFF state. xe2 (ms) represents an estimate of the Δt4 value calculated from the history data in this case.

In the same transitions from the operation state "s" to the operation state "t", the operation delay time may differ due to a power state being another element. In consideration of such a situation, the calculation information as to the control command E is calculated for each of the state transitions between states including a plurality of elements. The number of power states being another element is two so that with the number of possible operation states being m, the number of the state transitions will be $2 \times {}_mP_2$ at maximum. FIG. 5 illustrates only two state transitions; however, in response to occurrence of another state transition, the updater 104 also stores the estimated value or the calculation formula for this state transition.

From the history data containing (ON, s→t: 234 ms), (OFF, t→s: 242 ms), (OFF, s,t: 442 ms), (ON, s→t: 242 ms), and (OFF, s→t: 452 ms), the updater 104 can calculate, for example, the estimated values as average values of the history data, as below:

```
xe1 = (234 + 242)/ 2;
```

and

```
xe2 = (442 + 452)/ 2.
```

"ON" in (ON, s,t: 234 ms), for example, indicates a power state being an element differing from the state transition (s→t).

Each time history data is added, for example, the updater 104 updates the estimated value or the calculation formula for the corresponding state transition. In calculating the estimated value from an average value, the updater 104 adds an added value of the history data to the total value of the history data as of now and divides the resultant value by a value obtained by adding one to the total number of the pieces of history data, to thereby calculate a new estimated value. In obtaining the calculation formula for the estimated value by linear regression, the updater 104 recalculates a regression coefficient by adding the added value of the history data. In obtaining the approximation function as the calculation formula, the updater 104 adds the added value of the history data to sampling values and learns the approximation function again. In this manner, the updater 104 can enhance the estimated value and the calculation formula in terms of accuracy.

Thus, the control apparatus 100 (updater 104) continuously updates the estimated value and the calculation formula of the operation delay time with respect to each state transition in each control command for the purpose of enhancing the accuracy of the estimated value and the calculation formula. When the estimated value and the calculation formula become stable through repetitions of the update process, the control apparatus 100 may stop updating. After stop of the updating, the estimated value or the calculation formula stored in the storage 121 is regarded as a fixed value or formula. This makes it possible to estimate the operation delay time at higher speed.

In response to detection of an outlier greatly different from other values as an actual value (history data) of the operation delay time, the control apparatus 100 may execute preprocessing (filtering) to exclude the outlier before storing in the storage 121.

Immediately after start of the control over the device 300, for example, there may be no available history data corresponding to the various control commands. In such a case the control apparatus 100 may use a predefined default value as the estimated value of the operation delay time. In the case of no history data corresponding to a given control command (state transition), the control apparatus 100 may obtain the estimated value or the calculation formula with reference to existing history data of another state transition. In such a case, it may be expected that the device 300 cannot start a designated operation at correct time. In view of this, it is desirable to transmit various control commands a plurality of times to accumulate history data as a preparation for starting the control, thereby deriving an initial estimated value or calculation formula.

The calculator 102 calculates an estimate of the Δt4 value, referring to the estimated value or the calculation formula as obtained in the above-described manner. For example, the calculator 102 acquires an estimated value or a calculation formula corresponding to a control command type and a state-transition type to be transmitted, from the calculation information stored in the storage 121. After acquiring the calculation formula, the calculator 102 calculates an estimate of the Δt4 value by the calculation formula as acquired.

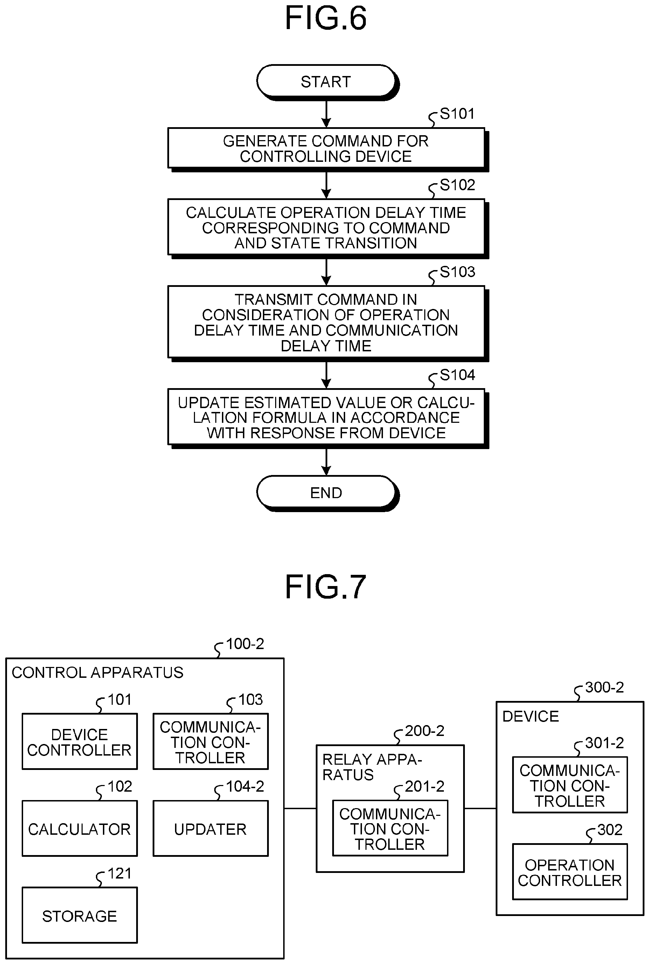

Next, control processing by the control apparatus 100 of the present arrangement as configured above will be described. FIG. 6 is a flowchart illustrating exemplary control processing according to the present arrangement.

The device controller 101 generates a control command for controlling the device 300 (step S101). The calculator 102 calculates an estimated value of an operation delay time corresponding to the type of the control command and a state transition by the control command (step S102).

The communication controller 103 transmits the control command to the device 300 in consideration of the operation delay time and communication delay time, so that the device 300 completes the state transition according to the control command at designated time (step S103).

The updater 104 obtains an actual value (history data) of the operation delay time in accordance with a response from the device 300, and updates the estimated value or the calculation formula stored in the storage 121 with the actual value (step S104).

The communication controller 103 may control the transmission of the control command in consideration of fluctuations or variations in the actual value of the communication delay time. For example, the calculator 102 calculates a fluctuation (such as a dispersion) in the history data in addition to the estimated value or the calculation formula. The communication controller 103 controls the transmission to transmit the control command at timing adjusted by the fluctuation. For example, in the case of a larger fluctuation, the communication controller 103 transmits the control command at earlier timing than in the case of a smaller fluctuation. The communication controller 103 may control the transmission of the control command, considering fluctuations or variations in the actual value of the operation delay time. In this case, the calculation information in FIG. 5 may include a fluctuation time added to the "Estimated value or Calculation formula" column so that the communication controller 103 may adjust the control-command transmission timing by adding the fluctuation time to the estimated value or calculation formula.

Thus, in the first arrangement, the control apparatus 100 can individually and dynamically estimate the operation delay time of the devices in accordance with the control command type or the state-transition type, to control the devices in consideration of the operation delay time. Thereby, the control apparatus 100 can control the operation timing of the devices at higher accuracy.

Second Arrangement

The first arrangement is based on the use of a communication protocol that allows a return of a response containing T4 and T5 (or Δt4) after completion of a state transition. Depending on communication protocols, a return to a response may not be allowed, or a reception response may be returned immediately after receipt of a control command but a response indicating completion of a state transition may not be returned after the state transition.

A second arrangement will describe an estimation of the operation delay time when T4 and T5 (or Δt4) cannot be obtained from a response.

FIG. 7 is a block diagram illustrating an exemplary configuration of apparatuses and a device included in a communication system according to the second arrangement. The communication system of the second arrangement includes a control apparatus 100-2, a relay apparatus 200-2, and a device 300-2.

The control apparatus 100-2 includes a storage 121, a device controller 101, a calculator 102, a communication controller 103, and an updater 104-2. The relay apparatus 200-2 includes a communication controller 201-2. The device 300-2 includes a communication controller 301-2 and an operation controller 302.

The second arrangement differ from the first arrangement in the functions of the updater 104-2 of the control apparatus 100-2, the communication controller 201-2 of the relay apparatus 200-2, and the communication controller 301-2 of the device 300-2. The rest of the elements and functions are substantially the same as those in FIG. 3, which is a block diagram of the control apparatus 100 of the first arrangement. Thus, the elements are denoted by the same reference numerals, and their description is omitted herein.

The communication controller 301-2 differs from the communication controller 301 in the first arrangement in that the communication controller 301-2 transmits a response packet not containing T4 and T5 (or $\Delta$t4) as a response to the control command.

The communication controller 201-2 differs from the communication controller 201 in the first arrangement in including a function of transmitting a state confirmation command to the device 300-2. The state confirmation command is for confirming the state of the device 300-2.

The updater 104-2 differs from the updater 104 in the first arrangement in using information substituted for T4 and T5 to calculate the operation delay time $\Delta$t4.

In failing to obtain T4 and T5 (or $\Delta$t4) from a response, the updater 104-2 can calculate the actual value of the operation delay time by adopting two policies as follows:

First Policy: If the device 300-2 has a function to transmit a notification message about a change in the state of the device 300-2, independently from operating following the control command, the updater 104-2 substitutes time T6', at which the relay apparatus 200-2 (communication controller 201-2) receives this notification message, for T5. In addition, the updater 104-2 substitutes time T3, at which the relay apparatus 200-2 transmits the control command, for T4. That is, the updater 104-2 calculates the operation delay time by the formula $\Delta$t4 = T6' - T3.

For example, the communication controller 301-2 may include the function of transmitting the notification message. First Policy is considered as an effective alternative for the relay apparatus 200-2 and the device 300-2 located close to each other, in other words, in the case of slight communication delay and small fluctuations in the communication delay.

Second Policy: If the device 300-2 adopts a communication protocol that returns no response after a state transition, the relay apparatus 200-2 (communication controller 201-2) transmits a state confirmation command for confirming the state of the device 300-2 at regular intervals. The updater 104-2 substitutes time T6'', at which the updater 104-2 confirms completion of a state transition of the device 300-2 designated by the control command from a response (an exemplary notification message) to the state confirmation command, for T5. In addition, the updater 104-2 substitutes time T3, at which the relay apparatus 200-2 transmits the control command, for T4. That is, the updater 104-2 calculates the operation delay time by the formula $\Delta$t4 = T6'' - T3.

As the intervals at which the state confirmation command is transmitted shorten, the accuracy heightens. However, excessive communications may affect the behavior of the device 300-2. In view of this, the relay apparatus 200-2 (communication controller 201-2) may adjust the transmission intervals of the state confirmation command, taking previous $\Delta$t4 values into account (i.e., in accordance with the type and details of the control command).

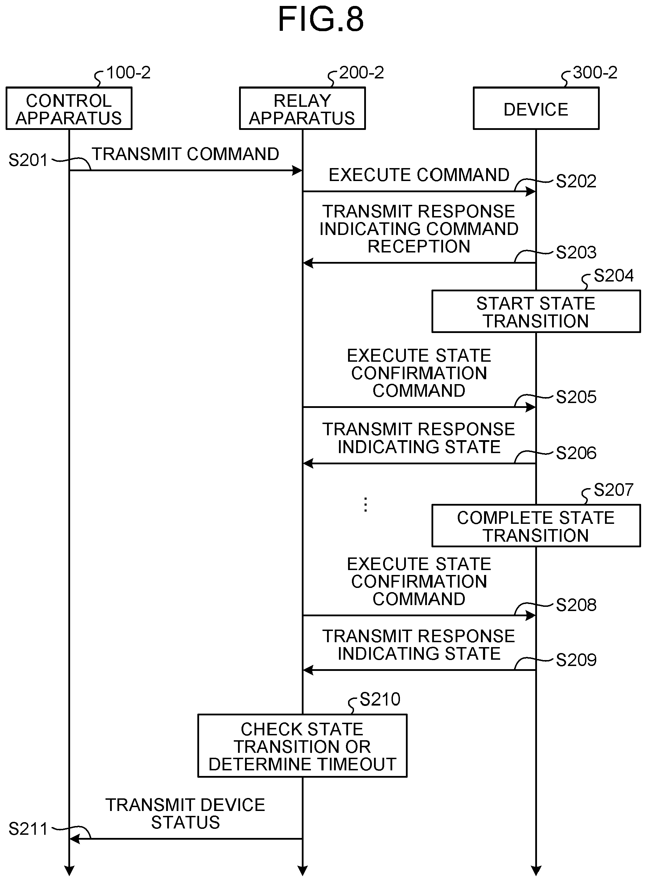

FIG. 8 is a sequence diagram illustrating exemplary control processing according to Second Policy.

The communication controller 103 of the control apparatus 100-2 transmits a control command to the relay apparatus 200-2 (step S201). The communication controller 201-2 of the relay apparatus 200-2 receives and transmits the control command to the device 300-2 (step S202).

The communication controller 301-2 of the device 300-2 transmits a reception response indicating reception of the control command to the relay apparatus 200-2 (step S203). The operation controller 302 of the device 300-2 starts a state transition in accordance with the control command (step S204). The order of executing step S203 and step S204 is not limited to this order, and these steps may be executed in reverse order or in parallel.

The communication controller 201-2 of the relay apparatus 200-2 transmits a state confirmation command to the device 300-2 (step S205). The communication controller 301-2 of the device 300-2 returns a response indicating the current state of the device 300-2 in response to the state confirmation command (step S206). In the example in FIG. 8, the device 300-2 has not completed a state transition following the control command, therefore, the communication controller 301-2 returns a response indicating non-completion of the state transition, for example.

The operation controller 302 then completes the state transition following the control command (step S207).

The communication controller 201-2 of the relay apparatus 200-2 transmits the state confirmation command to the device 300-2 again (step S208). The communication controller 301-2 of the device 300-2 returns a response indicating the current state of the device 300-2 in response to the state confirmation command (step S209). In the example in FIG. 8, the communication controller 301-2a returns a response indicating completion of the state transition.

The communication controller 201-2 of the relay apparatus 200-2 determines whether to have received a response indicating completion of a desired state transition (step S210). For example, after receiving a response indicating completion of the state transition within a given period, the communication controller 201-2 transmits a response containing time T6'' at which reception of the response is confirmed, to the control apparatus 100-2 (step S211). After receiving no response indicating completion of the state transition within the given period, the communication controller 201-2 determines no receipt of a response (i.e., timeout) and transmits a message indicating no reception to the control apparatus 100-2.

Thus, in the second arrangement, the control apparatus 100-2 can calculate the actual value of the operation delay time by a method different from that in the first arrangement in compliance with the communication protocol in use.

According to the first and second arrangements as described above, it is made possible to accurately control the operation timing of the intended devices.

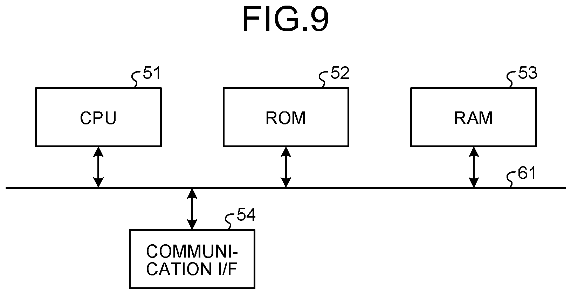

The following will describe a hardware configuration of the apparatuses and devices (control apparatus, relay apparatus, and devices) according to the first and second arrangements with reference to FIG. 9. FIG. 9 is an explanatory diagram illustrating an exemplary hardware configuration of the apparatuses and devices of the arrangements.

The apparatuses and devices according to the arrangements each include a controller such as a CPU 51, a storage such as a read only memory (ROM) 52 and a RAM 53, a communication interface (I/F) 54 connected to a network to perform communications, and a bus 61 connecting the elements to one another.

Computer programs executed by the apparatuses and devices according to the arrangements is incorporated in advance and provided in the ROM 52, for example.

The computer programs executed by the apparatuses and devices according to the arrangements may be recorded in an installable or executable file format on a computer-readable recording medium such as a compact disc read only memory (CD-ROM), a flexible disk (FD), a compact disc recordable (CD-R), and a digital versatile disc (DVD), and be provided as a computer program product.

Alternatively, the computer programs executed by the apparatuses and devices according to the arrangements may be stored on a computer connected to a network, such as the Internet, and be provided being downloaded via the network. The computer programs executed by the apparatuses and devices according to the arrangements may be provided or distributed via a network, such as the Internet.

The computer programs executed by the apparatuses and devices according to the arrangements cause a computer to function as the respective elements of the apparatuses and devices. In this computer, the CPU 51 can load and execute the computer programs from the computer-readable recording medium onto a main storage.

The present invention aims to provide a control apparatus, a control method, a computer-readable medium, and a communication system that can control the operation timing of intended devices accurately.

While certain arrangements have been described, these arrangements have been presented by way of example only, and are not intended to limit the scope of the claims.

**Claims**

1. A control apparatus (100; 100-2) comprising:

   a device controller (101) configured to generate a command for controlling operation of an intended device (300; 300-2);
   a calculator (102) configured to calculate an estimated value of an operation delay time according to classification information representing at least one of a type of the command and a type of a state transition of the device (300; 300-2) according to the command, the operation delay time being a length of time from when the device receives the command to when the device completes a state transition according to the command; and
   a communication controller (103) configured to transmit, at time adjusted in accordance with the estimated value, the command to the device (300; 300-2) so that the device completes the state transition according to the command at designated time.

2. The control apparatus (100; 100-2) according to claim 1, further comprising:

   a storage (121) configured to store therein the classification information and calculation information in association with each other, the calculation information representing the estimated value or a calculation formula for calculating the estimated value, wherein
   the calculator (102) calculates the estimated value using the calculation information associated with the classification information representing at least one of the type of the command and the type of the state transition of the device (300; 300-2) according to the command.

3. The control apparatus (100; 100-2) according to claim 2, further comprising:
an updater (104; 104-2) configured to update the calculation information with an actual value of the operation delay time to store the calculation information in the storage (121).

4. The control apparatus (100; 100-2) according to claim 3, wherein
the updater (104; 104-2) obtains the actual value of the operation delay time from temporal information contained in a response transmitted from the device (300; 300-2) with respect to the command.

5. The control apparatus (100; 100-2) according to claim 3, wherein
the updater (104; 104-2) obtains the actual value of the operation delay time according to time at which the updater has received a notification message as a response to the state confirmation command, the notification message indicating that the device (300; 300-2) has completed the state transition according to the command.

6. The control apparatus (100; 100-2) according to claim 1, wherein
the communication controller (103) transmits the command at time adjusted in accordance with a communication delay time and the estimated value, the communication delay time being a length of time from transmission of the command to receipt of the command by the device.

7. The control apparatus (100; 100-2) according to claim 1, wherein
the calculator (102) calculates the estimated value according to identification information and the classification information, the identification information being for identifying the device (300; 300-2) or a type of the device.

8. A control method comprising:

generating a command for controlling operation of an intended device (300; 300-2) (S101);
calculating an estimated value of an operation delay time according to classification information representing at least one of a type of the command and a type of a state transition of the device (300; 300-2) according to the command, the operation delay time being a length of time from when the device receives the command to when the device completes a state transition according to the command (S102); and
transmitting, at time adjusted in accordance with the estimated value, the command to the device (300; 300-2) so that the device completes the state transition according to the command at designated time (S103).

9. A computer readable medium comprising instructions which, when executed by a computer, cause the computer to perform:

generating a command for controlling operation of an intended device (300; 300-2) (S101);
calculating an estimated value of an operation delay time according to classification information representing at least one of a type of the command and a type of a state transition of the device (300; 300-2) according to the command, the operation delay time being a length of time from when the device receives the command to when the device completes a state transition according to the command (S102); and
transmitting, at time adjusted in accordance with the estimated value, the command to the device (300; 300-2) so that the device completes the state transition according to the command at designated time (S103).

10. A communication system comprising:

a relay apparatus (200; 200-2) connected to a device (300; 300-2) to be controlled; and
a control apparatus connected to the relay apparatus (200; 200-2), wherein

the control apparatus comprises:

a device controller (101) configured to generate a command for controlling operation of the device (300; 300-2) ;
a calculator (102) configured to calculate an estimated value of an operation delay time according to classification information representing at least one of a type of the command and a type of a state transition of the device (300; 300-2) according to the command, the operation delay time being a length of time from when the device receives the command to when the device completes a state transition according to the command; and
a communication controller (103) configured to transmit, at time adjusted in accordance with the estimated value, the command to the device (300; 300-2) so that the device completes the state transition according to the command at designated time, and

the relay apparatus (200; 200-2) is configured to receive and transmit the command from the control apparatus (100; 100-2) to the device (300; 300-2).

11. The communication system according to claim 10, wherein the control apparatus further comprises:

a storage (102) configured to store therein the classification information and calculation information in association with each other, the calculation information representing the estimated value or a calculation formula for calculating the estimated value; and
an updater (104; 104-2) configured to update the calculation information with an actual value of the operation delay time to store the calculation information in the storage (121),
the calculator (102) calculates the estimated value using the calculation information associated with the classification information representing at least one of the type of the command and the type of the state transition of the device (300; 300-2) according to the command,
the relay apparatus (200; 200-2) transmits a state confirmation command to the device (300; 300-2) after transmitting the command, the state confirmation command being for confirming a state of the device, and
the updater (104; 104-2) obtains the actual value of the operation delay time according to time at which the updater has received a notification message as a response to the state confirmation command, the notification message indicating that the device (300; 300-2) has completed the state transition according to the command.

**Patentansprüche**

1. Steuerungsvorrichtung (100; 100-2), umfassend:

eine Vorrichtungssteuerung (101), die konfiguriert ist, einen Befehl zum Steuern des Betriebs einer vorgesehenen Vorrichtung (300; 300-2) zu erzeugen;
einen Rechner (102), der konfiguriert ist, einen geschätzten Wert einer Verzögerungszeit für den Betrieb gemäß einer Klassifizierungsinformation zu berechnen, die mindestens einen Typ des Befehls und einen Typ eines Zustandsübergangs der Vorrichtung (300; 300-2) gemäß dem Befehl repräsentiert, wobei die Verzögerungszeit für den Betrieb eine Zeitspanne von dem Zeitpunkt, zu dem die Vorrichtung den Befehl empfängt, bis zu dem Zeitpunkt ist, zu dem die Vorrichtung einen Zustandsübergang gemäß dem Befehl vollendet; und
eine Kommunikationssteuerung (103), die konfiguriert ist, zu einem Zeitpunkt, der gemäß dem geschätzten Wert angepasst ist, den Befehl an die Vorrichtung (300; 300-2) zu übertragen, so dass die Vorrichtung den Zustandsübergang gemäß dem Befehl zu einer bestimmten Zeit vollendet.

2. Steuerungsvorrichtung (100; 100-2) nach Anspruch 1, ferner umfassend:

einen Speicher (121), der konfiguriert ist, darin die Klassifizierungsinformation und die Berechnungsinformation in Zuordnung zueinander zu speichern, wobei die Berechnungsinformation den geschätzten Wert oder eine Berechnungsformel zum Berechnen des geschätzten Wertes repräsentiert, wobei
der Rechner (102) den geschätzten Wert berechnet, unter Benutzung der Berechnungsinformation, die mit der Klassifizierungsinformation verbunden ist, die mindestens eine von der Art des Befehls und der Art des Zustandsübergangs der Vorrichtung (300; 300-2) gemäß dem Befehl repräsentiert.

3. Steuerungsvorrichtung (100; 100-2) nach Anspruch 2, ferner umfassend:
einen Aktualisierer (104; 104-2), der konfiguriert ist, die Berechnungsinformationen mit einem tatsächlichen Wert der Verzögerungszeit des Betriebs zu aktualisieren, um die Berechnungsinformationen in dem Speicher (121) zu speichern.

4. Steuerungsvorrichtung (100; 100-2) nach Anspruch 3, wobei
der Aktualisierer (104; 104-2) den tatsächlichen Wert der Verzögerungszeit des Betriebs aus zeitlichen Informationen erhält, die in einer von der Vorrichtung (300; 300-2) übertragenen Antwort in Bezug auf den Befehl enthalten sind.

5. Steuerungsvorrichtung (100; 100-2) nach Anspruch 3, wobei
der Aktualisierer (104; 104-2) den tatsächlichen Wert der Verzögerungszeit des Betriebs entsprechend dem Zeitpunkt erhält, zu dem der Aktualisierer eine Antwortmitteilung als Antwort auf den Zustandsbestätigungsbefehl empfangen hat, wobei die Antwortmitteilung angibt, dass die Vorrichtung (300; 300-2) den Zustandsübergang gemäß dem Befehl vollendet hat.

**6.** Steuerungsvorrichtung (100; 100-2) nach Anspruch 1, wobei
die Kommunikationssteuerung (103) den Befehl zu einem Zeitpunkt überträgt, der gemäß einer Verzögerungszeit für die Kommunikation und dem geschätzten Wert angepasst ist, wobei die Verzögerungszeit für die Kommunikation eine Zeitspanne von der Übertragung des Befehls bis zum Empfang des Befehls durch die Vorrichtung ist.

**7.** Steuerungsvorrichtung (100; 100-2) nach Anspruch 1, wobei
der Rechner (102) die Schätzung gemäß der Identifikationsinformation und der Klassifikationsinformation berechnet, wobei die Identifikationsinformation zur Identifizierung der Vorrichtung (300; 300-2) oder eines Typs der Vorrichtung dient.

**8.** Steuerungsverfahren, umfassend:

Erzeugen eines Befehls zum Steuern des Betriebs einer vorgesehenen Vorrichtung (300; 300-2) (S101);
Berechnen eines geschätzten Wertes einer Verzögerungszeit für den Betrieb gemäß einer Klassifizierungsinformation, die mindestens einen Typ des Befehls und einen Typ eines Zustandsübergangs der Vorrichtung (300; 300-2) gemäß dem Befehl repräsentiert, wobei die Verzögerungszeit für den Betrieb eine Zeitspanne von dem Zeitpunkt, zu dem die Vorrichtung den Befehl empfängt, bis zu dem Zeitpunkt ist, zu dem die Vorrichtung einen Zustandsübergang gemäß dem Befehl vollendet (S102); und
Übertragen des Befehls an die Vorrichtung (300; 300-2) zu einem gemäß dem geschätzten Wert angepassten Zeitpunkt, so dass die Vorrichtung den Zustandsübergang gemäß dem Befehl zu einem bestimmten Zeitpunkt vollendet (S103).

**9.** Computerlesbares Medium, das Anweisungen umfasst, die, wenn sie von einem Computer durchgeführt werden, den Computer veranlassen, durchzuführen:

Erzeugen eines Befehls zum Steuern des Betriebs einer vorgesehenen Vorrichtung (300; 300-2) (S101);
Berechnen eines geschätzten Wertes einer Verzögerungszeit für den Betrieb gemäß einer Klassifizierungsinformation, die mindestens einen Typ des Befehls und einen Typ eines Zustandsübergangs der Vorrichtung (300; 300-2) gemäß dem Befehl repräsentiert, wobei die Verzögerungszeit für den Betrieb eine Zeitspanne von dem Zeitpunkt, zu dem die Vorrichtung den Befehl empfängt, bis zu dem Zeitpunkt ist, zu dem die Vorrichtung einen Zustandsübergang gemäß dem Befehl vollendet (S102); und
Übertragen des Befehls an die Vorrichtung (300; 300-2) zu einem gemäß dem geschätzten Wert angepassten Zeitpunkt, so dass die Vorrichtung den Zustandsübergang gemäß dem Befehl zu einem bestimmten Zeitpunkt vollendet (S103).

**10.** Kommunikationssystem umfassend:

eine Relaisvorrichtung (200; 200-2), die mit einer zu steuernden Vorrichtung (300; 300-2) verbunden ist; und
eine Steuerungsvorrichtung, die mit der Relaisvorrichtung (200; 200-2) verbunden ist, wobei
die Steuerungsvorrichtung umfasst:

eine Vorrichtungssteuerung (101), die konfiguriert ist, einen Befehl zum Steuern des Betriebs der Vorrichtung (300; 300-2) anzuweisen;
einen Rechner (102), der konfiguriert ist, einen geschätzten Wert einer Verzögerungszeit für den Betrieb gemäß einer Klassifizierungsinformation zu berechnen, die mindestens einen Typ des Befehls und einen Typ eines Zustandsübergangs der Vorrichtung (300; 300-2) gemäß dem Befehl repräsentiert, wobei die Verzögerungszeit für den Betrieb eine Zeitdauer von dem Zeitpunkt, zu dem die Vorrichtung den Befehl empfängt, bis zu dem Zeitpunkt ist, zu dem die Vorrichtung einen Zustandsübergang gemäß dem Befehl vollendet; und
eine Kommunikationssteuerung (103), die konfiguriert ist, zu einem Zeitpunkt, der gemäß dem geschätzten Wert angepasst ist, den Befehl an die Vorrichtung (300; 300-2) zu übertragen, so dass die Vorrichtung den Zustandsübergang gemäß dem Befehl zu einer bestimmten Zeit vollendet, und

die Relaisvorrichtung (200; 200-2) konfiguriert ist, den Befehl von der Steuerungsvorrichtung (100; 100-2) zu empfangen und an die Vorrichtung (300; 300-2) zu übertragen.

**11.** Kommunikationssystem nach Anspruch 10, wobei

die Steuerungsvorrichtung ferner umfasst:

einen Speicher (102), der konfiguriert ist, darin die Klassifizierungsinformation und die Berechnungsinformation in Zuordnung zueinander zu speichern, wobei die Berechnungsinformation den geschätzten Wert oder eine Berechnungsformel zum Berechnen des geschätzten Wertes repräsentiert; und
einen Aktualisierer (104; 104-2), der konfiguriert ist, die Berechnungsinformation mit einem tatsächlichen Wert der Verzögerungszeit des Betriebs zu aktualisieren, um die Berechnungsinformation in dem Speicher (121) zu speichern, wobei der Rechner (102) den geschätzten Wert unter Benutzung der Berechnungsinformation benutzt, die der Klassifizierungsinformation zugeordnet ist, die mindestens einen von dem Typ des Befehls und dem Typ des Zustandsübergangs der Vorrichtung (300; 300-2) gemäß dem Befehl repräsentiert,

die Relaisvorrichtung (200; 200-2) nach dem Übertragen des Befehls einen Zustandsbestätigungsbefehl an die Vorrichtung (300; 300-2) überträgt, wobei der Zustandsbestätigungsbefehl zum Bestätigen eines Zustands der Vorrichtung dient, und
der Aktualisierer (104; 104-2) den tatsächlichen Wert der Verzögerungszeit des Betriebs gemäß dem Zeitpunkt erhält, zu dem der Aktualisierer eine Benachrichtigungsmitteilung als Antwort auf den Zustandsbestätigungsbefehl empfangen hat, wobei die Benachrichtigungsmitteilung angibt, dass die Vorrichtung (300; 300-2) den Zustandsübergang gemäß dem Befehl vollendet hat.

## Revendications

1. Appareil de commande (100 ; 100-2) comprenant :

un dispositif de commande (101) configuré pour générer une instruction pour commander le fonctionnement d'un dispositif (300 ; 300-2) visé ;
un calculateur (102) configuré pour calculer une valeur estimée d'un temps de retard de fonctionnement en fonction d'informations de classification représentant au moins un parmi un type de l'instruction et un type d'une transition d'état du dispositif (300 ; 300-2) en fonction de l'instruction, le temps de retard de fonctionnement étant une durée allant du moment où le dispositif reçoit l'instruction au moment où le dispositif achève une transition d'état en fonction de l'instruction ; et
un dispositif de commande (103) de communication configuré pour transmettre, à un moment réglé conformément à la valeur estimée, l'instruction au dispositif (300 ; 300-2) de telle sorte que le dispositif achève la transition d'état en fonction de l'instruction au moment désigné.

2. Appareil de commande (100 ; 100-2) selon la revendication 1, comprenant en outre :

une zone de stockage (121) configurée pour y stocker les informations de classification et des informations de calcul en association les unes avec les autres, les informations de calcul représentant la valeur estimée ou une formule de calcul pour calculer la valeur estimée, dans lequel
le calculateur (102) calcule la valeur estimée à l'aide des informations de calcul associées aux informations de classification représentant au moins un parmi le type de l'instruction et le type de la transition d'état du dispositif (300 ; 300-2) en fonction de l'instruction.

3. Appareil de commande (100 ; 100-2) selon la revendication 2, comprenant en outre :
un dispositif de mise à jour (104; 104-2) configuré pour mettre à jour les informations de calcul avec une valeur réelle du temps de retard de fonctionnement pour stocker les informations de calcul dans la zone de stockage (121).

4. Appareil de commande (100 ; 100-2) selon la revendication 3, dans lequel
le dispositif de mise à jour (104 ; 104-2) obtient la valeur réelle du temps de retard de fonctionnement à partir d'informations temporelles contenues dans une réponse transmise depuis le dispositif (300 ; 300-2) par rapport à l'instruction.

5. Appareil de commande (100 ; 100-2) selon la revendication 3, dans lequel
le dispositif de mise à jour (104 ; 104-2) obtient la valeur réelle du temps de retard de fonctionnement en fonction du moment où le dispositif de mise à jour a reçu un message de notification comme réponse à l'instruction de confirmation d'état, le message de notification indiquant que le dispositif (300 ; 300-2) a achevé la transition d'état en fonction de l'instruction.

6. Appareil de commande (100 ; 100-2) selon la revendication 1, dans lequel
le dispositif de commande (103) de communication transmet l'instruction à un moment réglé conformément à un temps de retard de communication et à la valeur estimée, le temps de retard de communication étant une durée allant de la transmission de l'instruction à la réception de l'instruction par le dispositif.

7. Appareil de commande (100 ; 100-2) selon la revendication 1, dans lequel
le calculateur (102) calcule la valeur estimée en fonction d'informations d'identification et des informations de classification, les informations d'identification servant à identifier le dispositif (300 ; 300-2) ou un type du dispositif.

8. Procédé de commande comprenant :

une génération d'une instruction pour commander le fonctionnement d'un dispositif (300 ; 300-2) visé (S101) ;
un calcul d'une valeur estimée d'un temps de retard de fonctionnement en fonction d'informations de classification représentant au moins un parmi un type de l'instruction et un type d'une transition d'état du dispositif (300 ; 300-2) en fonction de l'instruction, le temps de retard de fonctionnement étant une durée allant du moment où le dispositif reçoit l'instruction au moment où le dispositif achève une transition d'état en fonction de l'instruction (S102) ; et
une transmission, à un moment réglé conformément à la valeur estimée, de l'instruction au dispositif (300 ; 300-2) de telle sorte que le dispositif achève la transition d'état en fonction de l'instruction au moment désigné (S103).

9. Support lisible par ordinateur comprenant des instructions qui, lorsqu'elles sont exécutées par un ordinateur, amènent l'ordinateur à mettre en oeuvre :

une génération d'une instruction pour commander le fonctionnement d'un dispositif (300 ; 300-2) visé (S101) ;
un calcul d'une valeur estimée d'un temps de retard de fonctionnement en fonction d'informations de classification représentant au moins un parmi un type de l'instruction et un type d'une transition d'état du dispositif (300 ; 300-2) en fonction de l'instruction, le temps de retard de fonctionnement étant une durée allant du moment où le dispositif reçoit l'instruction au moment où le dispositif achève une transition d'état en fonction de l'instruction (S102) ; et
une transmission, à un moment réglé conformément à la valeur estimée, de l'instruction au dispositif (300 ; 300-2) de telle sorte que le dispositif achève la transition d'état en fonction de l'instruction au moment désigné (S103).

10. Système de communication comprenant :

un appareil de relais (200 ; 200-2) connecté à un dispositif (300 ; 300-2) à commander ; et
un appareil de commande connecté à l'appareil de relais (200 ; 200-2), dans lequel l'appareil de commande comprend :

un dispositif de commande (101) configuré pour générer une instruction pour commander le fonctionnement du dispositif (300 ; 300-2) ;
un calculateur (102) configuré pour calculer une valeur estimée d'un temps de retard de fonctionnement en fonction d'informations de classification représentant au moins un parmi un type de l'instruction et un type d'une transition d'état du dispositif (300 ; 300-2) en fonction de l'instruction, le temps de retard de fonctionnement étant une durée allant du moment où le dispositif reçoit l'instruction au moment où le dispositif achève une transition d'état en fonction de l'instruction ; et
un dispositif de commande (103) de communication configuré pour transmettre, à un moment réglé conformément à la valeur estimée, l'instruction au dispositif (300 ; 300-2) de telle sorte que le dispositif achève la transition d'état en fonction de l'instruction au moment désigné, et
l'appareil de relais (200 ; 200-2) est configuré pour recevoir et transmettre l'instruction de l'appareil de commande (100 ; 100-2) vers le dispositif (300 ; 300-2).

11. Système de communication selon la revendication 10, dans lequel l'appareil de commande comprend en outre :

une zone de stockage (102) configurée pour y stocker les informations de classification et des informations de calcul en association les unes avec les autres, les informations de calcul représentant la valeur estimée ou une formule de calcul pour calculer la valeur estimée ; et

un dispositif de mise à jour (104; 104-2) configuré pour mettre à jour les informations de calcul avec une valeur réelle du temps de retard de fonctionnement pour stocker les informations de calcul dans la zone de stockage (121),

le calculateur (102) calcule la valeur estimée à l'aide des informations de calcul associées aux informations de classification représentant au moins un parmi le type de l'instruction et le type de la transition d'état du dispositif (300 ; 300-2) en fonction de l'instruction,

l'appareil de relais (200 ; 200-2) transmet une instruction de confirmation d'état au dispositif (300 ; 300-2) après la transmission de l'instruction, l'instruction de confirmation d'état servant à confirmer un état du dispositif, et

le dispositif de mise à jour (104 ; 104-2) obtient la valeur réelle du temps de retard de fonctionnement en fonction du moment où le dispositif de mise à jour a reçu un message de notification comme réponse à l'instruction de confirmation d'état, le message de notification indiquant que le dispositif (300 ; 300-2) a achevé la transition d'état en fonction de l'instruction.

# FIG.1

5G BASE STATION

DISTRIBUTED POWER SUPPLY

CONTROL APPARATUS — 100

CLOUD

RELAY APPARATUS (MEC) — 200a

RELAY APPARATUS (MEC) — 200b

300a

300b

300c

300d

EP 3 996 332 B1

# FIG.2

INSIDE BUILDING OR HOME

DISTRIBUTED POWER SUPPLY

CLOUD

CONTROL APPARATUS ~100

RELAY APPARATUS (GW) ~200c

RELAY APPARATUS (GW) ~200d

300a

300b

300c

300d

EP 3 996 332 B1

# FIG.3

CONTROL APPARATUS — 100

DEVICE CONTROLLER — 101

COMMUNICATION CONTROLLER — 103

CALCULATOR — 102

UPDATER — 104

STORAGE — 121

RELAY APPARATUS — 200

COMMUNICATION CONTROLLER — 201

DEVICE — 300

COMMUNICATION CONTROLLER — 301

OPERATION CONTROLLER — 302

# FIG.4

EP 3 996 332 B1

# FIG.5

| COMMAND TYPE | STATE TRANSITION ST1 | ESTIMATED VALUE OR CALCULATION FORMULA | STATE TRANSITION ST2 | ESTIMATED VALUE OR CALCULATION FORMULA | HISTORY DATA |
|---|---|---|---|---|---|
| COMMAND A | POWER ON → POWER OFF | xa1 ms | POWER OFF → POWER ON | xa2 ms | (ON→OFF: 1650 ms), (OFF→ON: 1956 ms), (ON→OFF: 1672 ms), (OFF→ON: 1932 ms), ⋯ |
| COMMAND B | INCREASE IN CONTROL VALUE | (xb1 ms/INCREASE UNIT) × DESIGNATED VALUE (INCREASE) + b1 ms | DECREASE IN CONTROL VALUE | (xb2 ms/DECREASE UNIT) × DESIGNATED VALUE (DECREASE) + b2 ms | (5→8: 453 ms), (8→3: 212 ms), (3→10: 1002 ms), (10→5: 222 ms), ⋯ |
| COMMAND C | $\alpha$ STATE→ $\beta$ STATE | xc1 ms | $\beta$ STATE→ $\gamma$ STATE | xc2 ms | ($\alpha \rightarrow \beta$ : 242 ms), ($\beta \rightarrow \gamma$ : 321 ms), ($\gamma \rightarrow \alpha$ : 294 ms), ($\alpha \rightarrow \beta$ : 232 ms), ($\beta \rightarrow \gamma$ : 319 ms), ⋯ |
| COMMAND D | INCREASE IN CONTROL VALUE | f (x_current, x_new) | DECREASE IN CONTROL VALUE | g (x_current, x_new) | (5→8: 2444 ms), (8→3: 4332 ms), ⋯ |
| COMMAND E | POWER ON, s STATE→ t STATE | xe1 ms | POWER OFF, s STATE→ t STATE | xe2 ms | (ON, s→t: 234 ms), (OFF, t→s: 242 ms), (OFF, s→t: 442 ms), (ON, s→t: 242 ms), (OFF, s→t: 452 ms), ⋯ |
| ⋮ | ⋮ | ⋮ | ⋮ | ⋮ | ⋮ |

# FIG.6

```
        ┌─────────────┐
        │    START    │
        └──────┬──────┘
               │              ┌S101
        ┌──────▼──────────────┐
        │  GENERATE COMMAND FOR │
        │  CONTROLLING DEVICE   │
        └──────┬──────────────┘
               │              ┌S102
        ┌──────▼──────────────┐
        │ CALCULATE OPERATION DELAY TIME │
        │ CORRESPONDING TO COMMAND │
        │  AND STATE TRANSITION │
        └──────┬──────────────┘
               │              ┌S103
        ┌──────▼──────────────┐
        │   TRANSMIT COMMAND IN │
        │ CONSIDERATION OF OPERATION │
        │ DELAY TIME AND COMMUNICATION │
        │      DELAY TIME       │
        └──────┬──────────────┘
               │              ┌S104
        ┌──────▼──────────────┐
        │ UPDATE ESTIMATED VALUE OR CALCU- │
        │ LATION FORMULA IN ACCORDANCE │
        │ WITH RESPONSE FROM DEVICE │
        └──────┬──────────────┘
               │
        ┌──────▼──────┐
        │     END     │
        └─────────────┘
```

# FIG.7

**CONTROL APPARATUS** ⌐100-2

- ⌐101 DEVICE CONTROLLER
- ⌐103 COMMUNICATION CONTROLLER
- ⌐102 CALCULATOR
- ⌐104-2 UPDATER
- ⌐121 STORAGE

**RELAY APPARATUS** ⌐200-2

- ⌐201-2 COMMUNICATION CONTROLLER

**DEVICE** ⌐300-2

- ⌐301-2 COMMUNICATION CONTROLLER
- ⌐302 OPERATION CONTROLLER

# FIG.8

# FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015001311 A1
- US 2017185055 A1

- US 2012187770 A1